# EUROPEAN PATENT SPECIFICATION

(11) **EP 4 300 659 B1**
(45) Date of publication and mention of the grant of the patent: **05.08.2026**
(21) Application number: 22831632.9
(22) Date of filing: 07.06.2022
(51) Int. Cl.: H01M 10/613

(54) **BATTERY COOLING PLATE, AND BATTERY SYSTEM**
BATTERIEKÜHLPLATTE UND BATTERIESYSTEM
PLAQUE DE REFROIDISSEMENT DE BATTERIE ET SYSTÈME DE BATTERIE

(30) Priority: 30.06.2021 CN 202110741232
(43) Date of publication of application: 03.01.2024
(73) Proprietor: BYD Company Limited, Shenzhen, Guangdong 518118 (CN)
(72) Inventor: GUO, Shu, Shenzhen, Guangdong 518118 (CN); PENG, Qingbo, Shenzhen, Guangdong 518118 (CN)
(74) Representative: Arnold & Siedsma
(86) International application number: PCT/CN2022/097400
(87) International publication number: WO 2023/273811

(56) References cited:
- CN-A- 105 789 728
- CN-A- 108 075 066
- CN-A- 111 525 213
- CN-U- 203 607 491
- CN-U- 203 607 491
- CN-U- 212 392 303
- JP-A- 2018 054 215
- US-A1- 2008 008 916
- US-A1- 2020 136 205

## Description

### FIELD

The present invention relates to a new energy battery heat dissipation technology, and more specifically, to a battery cold plate and a battery system. In particular, the present invention relates to a battery cold plate as defined in the preamble of claim 1, and as illustrated in CN 111 525 213.

### BACKGROUND

The current new energy battery heat dissipation system is designed to have an air cooling method, a liquid cooling method, a direct cooling method, etc. Different cooling methods achieve different heat exchange results. The liquid cooling method is a commonly used cooling method at present, and a liquid cooling plate is mainly designed for liquid cooling. Currently, more attention is paid to the design of flow channels in the design of cold plates. As the power demand and mile range of the battery system turn out to be increasingly higher, the size of the battery pack is getting bigger and bigger, the size of the cold plate is also getting bigger and bigger, and the flow demand in the heat dissipation system is getting increasingly higher. In the current technology, the flow resistance difference of the branch inside the cold plate is bigger, so that the temperature of various positions of the cold plate is not uniform, resulting in poor heat dissipation balance.

### SUMMARY

The present invention provides a battery cold plate and a battery system. The uniformity of the temperature of various positions of the cold plate can be improved, and the heat dissipation balance and efficiency are improved.

In one aspect, an embodiment of the present invention provides a battery cold plate which includes two external interfaces, two convergence pipelines, and multiple branches.

Each of the convergence pipelines is arranged extending along a first direction, and the two external interfaces are respectively in communication with the middle positions of the two convergence pipelines in the first direction.

The multiple branches are arranged side by side along the first direction, and arranged between the two convergence pipelines in a second direction. Both ends of each of the branches in the second direction are respectively in communication with the two convergence pipelines through at least one throttling port. The first direction and the second direction are two directions perpendicular to each other. The total cross-sectional area of the throttling port in a branch close to the external interface is smaller than the total cross-sectional area of the throttling port in a branch away from the external interface.

Multiple sub-branches are arranged in the branch along the first direction. Each of the sub-branches is arranged extending along the second direction. The end portions of the multiple sub-branches in the same branch are communicated. The cross-sectional areas of all the sub-branches are the same.

In an embodiment, the number of the throttling port in the branch close to the external interface is less than the number of the throttling port in the branch away from the external interface.

In an embodiment, the number of the throttling port in the branch close to the external interface is equal to the number of the throttling port in the branch away from the external interface.

The cross-sectional areas of the various throttling ports are the same.

The cross-sectional area of the throttling port in the branch close to the external interface is less than the cross-sectional area of the throttling port in the branch away from the external interface.

The number of the sub-branch within the branch close to the external interface is greater than the number of the sub-branch within the branch away from the external interface.

In an embodiment, all the sub-branches in all the branches have the same cross-sectional area.

In an embodiment, the two external interfaces are respectively a main inlet and a main outlet. The two convergence pipelines are respectively an inlet convergence pipeline and an outlet convergence pipeline. The main inlet, the inlet convergence pipeline, the multiple branches, the outlet convergence pipeline, and the main outlet are sequentially communicated. A throttling port between the branch and the inlet convergence pipeline is an inflow throttling port. A throttling port between the branch and the outlet convergence pipeline is an outflow throttling port.

In an embodiment, the number of the inflow throttling port and the number of the outflow throttling port in the same branch are the same, and the cross-sectional area of the outflow throttling port is equal to or greater than the cross-sectional area of the inflow throttling port.

In an embodiment, a branch close to the main inlet includes a first inflow throttling port and a first outflow throttling port, and the distance between the first inflow throttling port and the main inlet is less than the distance between the first outflow throttling port and the main outlet.

In an embodiment, in one of the branches, the branch has a first side and a second side opposite to each other and in the first direction, an inflow convergence cavity is formed between the end portions of multiple of the sub-branches and the inflow throttling port, and an outflow convergence cavity is formed between the end portions of multiple of the sub-branches and the outflow throttling port;
along a direction from the first side to the second side, the size of the inflow convergence cavity in the second direction gradually decreases, and the size of the outflow convergence cavity in the second direction gradually increases;
the inflow throttling port is arranged at a position where the size of the inflow convergence cavity in the second direction is larger; and
the outflow throttling port is arranged at a position where the size of the outflow convergence cavity in the second direction is larger.

In an embodiment, an inlet cavity is provided at the main inlet, the main inlet is in communication with the inlet convergence pipeline via the inlet cavity, multiple inlet projections are arranged in the inlet cavity, and the multiple inlet projections are arranged in an array.

In an embodiment, an outlet cavity is provided at the main outlet, the main outlet is in communication with the outlet convergence pipeline via the outlet cavity, multiple outlet projections are arranged in the outlet cavity, and the multiple outlet projections are arranged in an array.

In an embodiment, multiple first flow guide strips are arranged within the inlet convergence pipeline, and the multiple first flow guide strips extend along the first direction and are arranged at intervals.

In an embodiment, the multiple first flow guide strips are arranged in one or more rows along the second direction.

In an embodiment, with the connection line of the positions where the centers of the two external interfaces are located as a central axis, the structure of the battery cold plate is symmetrical on both sides of the central axis.

In an embodiment, the battery cold plate includes a first plate body and a second plate body opposite to the first plate body. The first plate body forms a cavity and multiple convex ribs on the surface. The multiple convex ribs are arranged in the cavity. The convex ribs separate the cavity to form the two convergence pipelines, the multiple branches, and the multiple sub-branches. The second plate body is provided with multiple butt joint holes. The multiple butt joint holes are provided in correspondence with the multiple convex ribs. The multiple convex ribs are connected in the multiple butt joint holes in an abutting-against mode so as to realize positioning connection between the first plate body and the second plate body.

In an embodiment, the multiple convex ribs and the multiple butt joint holes are in interference fit.

In an embodiment, the butt joint hole is a through hole.

In another aspect, an embodiment of the present invention further provides a battery system which includes batteries and the foregoing battery cold plate. The battery cold plate is attached to the battery.

According to the battery cold plate and the battery system provided by the embodiment of the present invention, the two external interfaces are respectively in communication with the middle positions of the two convergence pipelines in the first direction. Thus, the flow path of cooling liquid in the convergence pipeline is enabled to be half of the length of the convergence pipeline, so that the along-the-way flow resistance of the cooling liquid in the convergence pipeline can be reduced. By gradually increasing the total cross-sectional area of multiple throttling ports of a branch away from the main outlet, and enabling the widths, i.e., the cross-sectional areas, of the sub-branches in all the branches to be the same, the flow resistance of each branch can be balanced, it is ensured that the flow resistance in the various branches is consistent, and the flow rate of the cooling liquid in the various branches is made to be in balance, further making the temperature of various positions of the cold plate uniform, improving the heat dissipation balance and efficiency and facilitating lowering the demand of the system for the power of a circulation pump, which further reduces the system cost.

### BRIEF DESCRIPTION OF THE DRAWINGS

To describe the technical solutions in the present invention more clearly, the following briefly introduces the accompanying drawings required for describing the implementations. Apparently, the accompanying drawings in the following description show merely some implementations of the present invention, and a person of ordinary skill in the art may still derive other drawings from these accompanying drawings without creative efforts.
FIG. 1 is a schematic structural view of pipelines in a battery cold plate provided by an embodiment of the present invention;
FIG. 2 is a schematic view showing that cooling liquid flows in the pipeline in FIG. 1;
FIG. 3 is a schematic structural view of a first plate body of the battery cold plate provided by the embodiment of the present invention; and
FIG. 4 is a schematic structural view of a second plate body of the battery cold plate provided by the embodiment of the present invention.

### DETAILED DESCRIPTION

The following clearly and completely describes the technical solutions in implementations of the present invention with reference to the accompanying drawings in the implementations of the present invention.

To make the foregoing objectives, features, and advantages of the present invention clearer to understand, the following describes the present invention in detail with reference to the accompanying drawings and implementations. It is to be noted that, to the extent not conflicting, the implementations in the present invention and features in the implementations may be combined with each other.

Many specific details are illustrated in the following description to facilitate fully understanding the present invention. The described implementations are merely a part rather than all of the implementations of the present invention. All other implementations obtained by a person of ordinary skill in the art based on the implementations of the present invention without creative efforts shall fall within the protection scope of the present invention.

The present invention provides a battery cold plate and a battery system. The battery system includes batteries and the battery cold plate. The battery cold plate is attached to the battery. The battery cold plate can perform heat dissipation on the battery in a liquid cooling method.

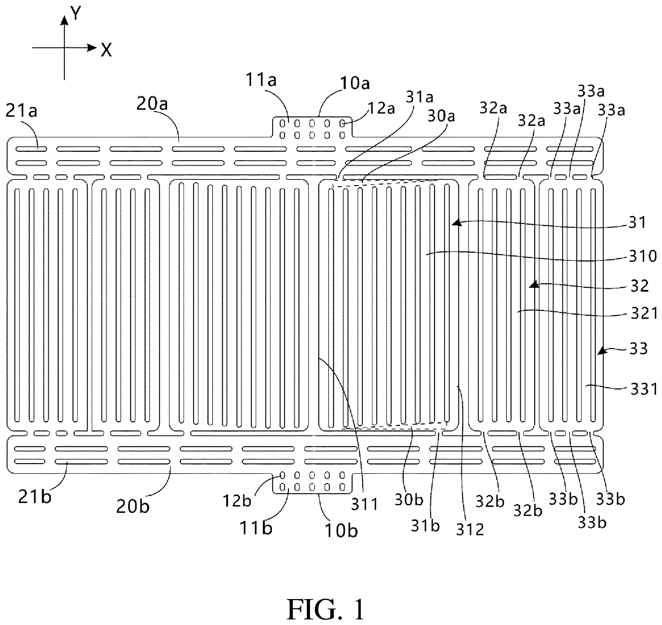

In the following description, a first direction extending along an X-axis is hereinafter referred to as a "first direction X" and a second direction extending along a Y-axis is hereinafter referred to as a "second direction Y", which are two directions perpendicular to each other. In combination with what is shown in FIG. 1, the battery cold plate is square as whole, the first direction X is namely the length direction of the left and right sides of the battery cold plate, and the second direction Y is the width direction of the top and bottom of the battery cold plate. Of course, in other embodiments, the first direction X may also be the width direction of the battery cold plate, and the second direction Y may be the length direction of the battery cold plate.

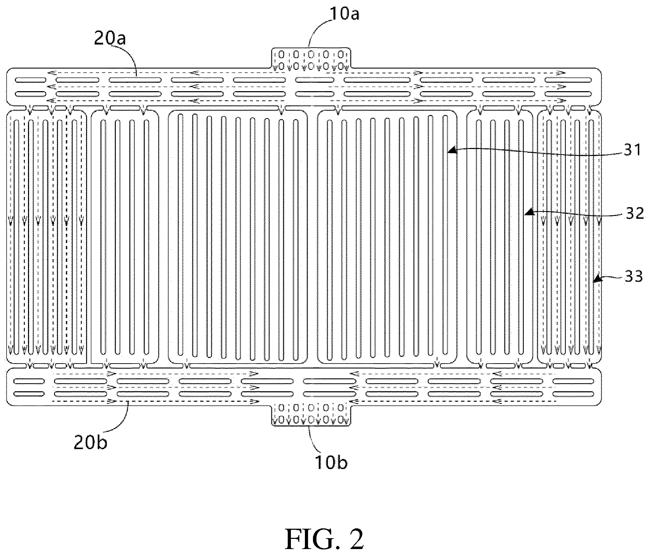

As shown in FIG. 1 and FIG. 2, along the flow direction of cooling liquid, the battery cold plate includes a main inlet 10a, an inlet convergence pipeline 20a, multiple branches 31/32/33, an outlet convergence pipeline 20b, and a main outlet 10b which are sequentially communicated. The main inlet 10a and the main outlet 10b are two external interfaces of the battery cold plate, and can be used for being connected to two circulation end ports of a circulation pump respectively. The cooling liquid flows into the battery cold plate through the main inlet 10a, and then sequentially flows through the inlet convergence pipeline 20a, the multiple branches 31/32/33, and the outlet convergence pipeline 20b to flow out of the battery cold plate from the main outlet 10b and flows back to the circulation pump.

The inlet convergence pipeline 20a and the outlet convergence pipeline 20b are two convergence pipelines, which are respectively arranged at the main inlet 10a and the main outlet 10b. The inlet convergence pipeline 20a and the outlet convergence pipeline 20b are both arranged extending along the first direction X. The main inlet 10a is in communication with the middle position of the inlet convergence pipeline 20a along the first direction X. After the cooling liquid enters the inlet convergence pipeline 20a through the main inlet 10a, the cooling liquid flows in the first direction X to both ends of the inlet convergence pipeline 20a respectively, so that the flow path of the cooling liquid in the inlet convergence pipeline 20a is half of the length of the inlet convergence pipeline 20a, thereby reducing the along-the-way flow resistance of the cooling liquid in the inlet convergence pipeline 20a.

The main inlet 10a is provided with an inlet cavity 11a, and the main inlet 10a is in communication with the inlet convergence pipeline 20a via the inlet cavity 11a. The inlet cavity 11a is square, multiple inlet projections 12a are arranged within the inlet cavity 11a, the multiple inlet projections 12a are arranged in an array, and the multiple inlet projections 12a can also be used for diverting the cooling liquid entering the inlet cavity 11a to avoid the case that cooling liquid is too centralized at the position, increasing the flow resistance.

Multiple first flow guide strips 21a are arranged within the inlet convergence pipeline 20a, and the multiple first flow guide strips 21a extend along the first direction X and are arranged at intervals. The multiple first flow guide strips 21a extend along the first direction X. With the first flow guide strips 21a, the cooling liquid entering the inlet convergence pipeline 20a can flow along the first flow guide strips 21a, i.e., flow along the first direction X, thereby reducing the flow resistance of the cooling liquid in the inlet convergence pipeline 20a. The multiple first flow guide strips 21a are arranged at intervals along the first direction X. Part of the cooling liquid may flow to the branch in gaps between the multiple flow guide strips.

In this embodiment, the multiple first flow guide strips 21a are arranged in two rows along the second direction Y to better achieve the effect of guiding flow to reduce the flow resistance, and at the same time, more cooling liquid can be guided to a branch away from the main inlet 10a. In other embodiments, the multiple first flow guide strip 21a may be arranged in one row, or three rows, or more rows, depending on the length of the battery cold plate in the first direction X and the need for guiding flow.

The multiple branches 31/32/33 are arranged side by side along the first direction, and located between the inlet convergence pipeline 20a and the outlet convergence pipeline 20b in the second direction Y. Both ends of each of the branches in the second direction Y are in communication with the inlet convergence pipeline 20a and the outlet convergence pipeline 20b through multiple throttling ports.

Multiple sub-branches are arranged in each of the branches 31/32/33 along the first direction X. Each of the sub-branches is arranged extending along the second direction Y. The end portions of the multiple sub-branches in the same branch are communicated, so that the cooling liquid entering the branch enters the sub-branch from one end of the sub-branch and flows out of the sub-branch from another end of the sub-branch.

In this embodiment, the number of the branches is six, and in the first direction X, with the connection line between the positions where the centers of the main inlet 10a and the main outlet 10b are located as a central axis, three branches are arranged on each side of the central axis, the structures on both sides of the central axis are generally the same, and the structure of every three branches is described herein with one side as an example. For convenience of description, every three branches are a first branch 31, a second branch 32, and a third branch 33 respectively. The second branch 32 is arranged between the first branch 31 and the third branch 33. The first branch 31 is close to the main inlet 10a and the main outlet 10b relative to the third branch 33.

One end of the first branch 31 is in communication with the inlet convergence pipeline 20a via a first inflow throttling port 31a, and another end of the first branch is in communication with the outlet convergence pipeline 20b via a first outflow throttling port 31b. In the first branch 31, the number of the first inflow throttling port 31a is one and the number of the first outflow throttling port 31b is one. Multiple first sub-branches 310 are arranged within the first branch 31. Herein, the number of the first inflow throttling port 31a and the number of the first outflow throttling port 31b may be determined according to the number of the first sub-branch 310 within the first branch 31, and when the number of the first sub-branch 310 is large, two or more first inflow throttling ports 31a may be provided in order to enable the cooling liquid to enter all the first sub-branches 310. In order to enable the cooling liquid to flow out of the first branch 31 timely, and to avoid excessive pressure in the first branch 31, two or more first outflow throttling ports 31b may also be provided, in this case, the cross-sectional area of each of the first outflow throttling ports 31b and the cross-sectional area of each of the first inflow throttling ports 31a are the same, and thus the flow of the cooling liquid is adjusted by setting the number. Of course, in other embodiments, it may be possible to maintain both the number of the first outflow throttling port 31b and the number of the first inflow throttling port 31a as one. The flow of the cooling liquid is adjusted by increasing or decreasing the cross-sectional area.

The distance between the first inflow throttling port 31a and the main inlet 10a is smaller than the distance between the first outflow throttling port 31b and the main outlet 10b, so that the cooling liquid entering the inlet convergence pipeline 20a flows at a shorter distance to enter the first branch 31, thus it is easy for the cooling liquid to enter the first branch 31, reducing the resistance of the cooling liquid for entering the first branch 31. In this embodiment, the cross-sectional area of the first outflow throttling port 31b is equal to the cross-sectional area of the first inflow throttling port 31a to facilitate machining and molding. In order to further reduce the flow resistance between the first branch 31 and the outlet convergence pipeline 20b, the cross-sectional area of the first outflow throttling port 31b may be set to be larger than the cross-sectional area of the first inflow throttling port 31a.

In the first branch 31, the first branch 31 has a first side 311 and a second side 312 opposite to each other and in the first direction X. In this embodiment, the first side 311 is close to the main inlet and the main outlet relative to the second side 312. Of course, in other embodiments, it is also possible that the second side 312 is close to the main inlet and the main outlet relative to the first side 311.

An inflow convergence cavity 30a is formed between the end portions of the multiple first sub-branches 310 and the first inflow throttling port 31a, and along a direction from the first side 311 to the second side 312, the size of the inflow convergence cavity 30a in the second direction Y decreases gradually, such that the inflow convergence cavity 30a is roughly in a triangular wedge-shaped structure. The first inflow throttling port 31a is located at a position where the size of the inflow convergence cavity 30a in the second direction Y is larger, i.e., the first inflow throttling port 31a is located at a position close to the first side 311, and the inflow convergence cavity 30a has a larger space at a position close to the first inflow throttling port 31a, which makes it easy for the cooling liquid to enter the first branch 31, reducing the flow resistance for entering the first branch 31.

An outflow convergence cavity 30b is formed between the end portions of the multiple first sub-branches 310 and the first outflow throttling port 31b, and along the direction from the first side 311 to the second side 312, the size of the outflow convergence cavity 30b in the second direction Y gradually increases, such that the outflow convergence cavity 30b is roughly in a triangular wedge-shaped structure. The first outflow throttling port 31b is located at a position where the size of the outflow convergence cavity 30b in the second direction Y is larger, i.e., the first outflow throttling port 31b is located at a position close to the second side 312. The space of the outflow convergence cavity 30b at a position close to the first outflow throttling port 31b is larger, which makes it easy for the cooling liquid to converge to a position of the outflow convergence cavity 30b close to the first outflow throttling port 31b, further facilitating that the cooling liquid flows out of the first outflow throttling port 31b to the outlet convergence pipeline 20b, and reducing the flow resistance of the cooling liquid when flowing out of the first branch 31.

Along the direction from the first side 311 to the second side 312, the size of the inflow convergence cavity 30a in the second direction Y gradually decreases, and the size of the outflow convergence cavity 30b in the second direction Y gradually increases, which can make an inlet of the first sub-branch 310 close to the first side 311 larger and an outlet of the first sub-branch close to the first side smaller, and an inlet of the first sub-branch 310 close to the second side 312 smaller and an outlet of the first sub-branch close to the second side larger, so it can ensure that the flow rate of the cooling liquid in different first sub-branches 310 is approximately the same, and ensures balanced flow of the cooling liquid in the various first sub-branches 310. In the multiple branches, a branch closest to the position of the external interface, i.e., such as the first branch in this embodiment, has the largest number of sub-branches therein, and in this branch, the inflow convergence cavity and the outflow convergence cavity are both wedge-shaped to ensure the balance among the multiple sub-branches, whereas in the other branches, such as the second branch and the third branch, the number of the sub-branches is relatively small, and it is sufficient that the inflow convergence cavity and the outflow convergence cavity are both set to be square.

One end of the second branch 32 is in communication with the inlet convergence pipeline 20a via two second inflow throttling ports 32a, and another end of the second branch is in communication with the outlet convergence pipeline 20b via two second outflow throttling ports 32b. Multiple second sub-branches 321 are arranged within the second branch 32. One end of the third branch 33 is in communication with the inlet convergence pipeline 20a via three third inflow throttling ports 33a, and another end of the third branch is in communication with the outlet convergence pipeline 20b via three third outflow throttling ports 33b. Multiple third sub-branches 331 are arranged within the third branch 33.

In this embodiment, the first inflow throttling port 31a, the second inflow throttling port 32a, and the third inflow throttling port 33a have the same aperture, i.e., the same cross-sectional area, and since the number of the first inflow throttling port 31a is one, the number of the second inflow throttling port 32a is two, and the number of the third inflow throttling port 33a is three, the total cross-sectional area of the one first inflow throttling port 31a, the total cross-sectional area of the two second inflow throttling ports 32a, and the total cross-sectional area of the three third inflow throttling ports 33a sequentially increase, i.e., the total cross-sectional area of multiple throttling ports of a branch close to the main inlet 10a is smaller than the total cross-sectional area of multiple throttling ports of the branch away from the main inlet 10a, and by gradually increasing the total cross-sectional area of the multiple throttling ports of the branch away from the main inlet 10a, the flow resistance of the cooling liquid for entering the branch away from the main inlet 10a can be reduced.

Since the first inflow throttling port 31a, the second inflow throttling port 32a, and the third inflow throttling port 33a have the same aperture, i.e., the same cross-sectional area, designing the number of the throttling port according to the distance between the branch and the main inlet 10a can reduce the flow resistance of the cooling liquid for entering the branch away from the main inlet 10a, facilitating carrying out the structural layout design.

Herein, in other embodiments, the number of the second inflow throttling port 32a and the number of the third inflow throttling port 33a may both be one, in this case, the aperture, i.e., the cross-sectional area, of the second inflow throttling port 32a is required to be larger than the cross-sectional area of the first inflow throttling port 31a, and the aperture, i.e., the cross-sectional area, of the third inflow throttling port 33a is required to be larger than the cross-sectional area of the second inflow throttling port 32a.

In addition, while the number of the first inflow throttling port 31a, the number of the second inflow throttling port 32a, and the number of the third inflow throttling port 33a gradually increase, it can be set that the cross-sectional areas of the first inflow throttling port, the second inflow throttling port, and the third inflow throttling port also gradually increase, so as to further reduce the flow resistance of the cooling liquid for entering the second branch and the third branch.

In this embodiment, the first outflow throttling port 31b, the second outflow throttling port 32b, and the third outflow throttling port 33b have the same aperture, i.e., the same cross-sectional area, and since the number of the first outflow throttling port 31b is one, the number of the second outflow throttling port 32b is two, and the number of the third outflow throttling port 33b is three, the total cross-sectional area of the one first outflow throttling port 31b, the total cross-sectional area of the two second outflow throttling ports 32b, and the total cross-sectional area of the three third outflow throttling ports 33b sequentially increase, i.e., the total cross-sectional area of multiple throttling ports of the branch close to the main outlet 10b is smaller than the total cross-sectional area of multiple throttling ports of a branch away from the main outlet 10b, and by gradually increasing the total cross-sectional area of multiple throttling ports of the branch away from the main outlet 10b, the flow resistance of the cooling liquid for flowing out of the branch away from the main outlet 10b can be reduced.

Since the first outflow throttling port 31b, the second outflow throttling port 32b, and the third outflow throttling port 33b have the same aperture, i.e., the same cross-sectional area, designing the number of the outflow throttling port according to the distance between the branch and the main outlet 10b can reduce the flow resistance of the cooling liquid for flowing out of the branch away from the main outlet 10b, facilitating carrying out the structural layout design.

Herein, in other embodiments, the number of the second outflow throttling port 32b and the number of the third outflow throttling port 33b may both be one, in this case, the aperture, i.e., the cross-sectional area, of the second outflow throttling port 32b is required to be larger than the cross-sectional area of the first outflow throttling port 31b, and the aperture, i.e., the cross-sectional area, of the third outflow throttling port 33b is required to be larger than the cross-sectional area of the second outflow throttling port 32b.

In addition, while the number of the first outflow throttling port 31b, the number of the second outflow throttling port 32b, and the number of the third outflow throttling port 33b gradually increase, it can be set that the cross-sectional areas of the first outflow throttling port, the second outflow throttling port, and the third outflow throttling port also gradually increase, so as to further reduce the flow resistance of the cooling liquid for flowing out of the second branch and the third branch.

The number of the first sub-branch 310 in the first branch 31 is greater than the number of second sub-branch 321 in the second branch 32, and the number of the second sub-branch 321 in the second branch 32 is the same as the number of the third sub-branch 331 in the third branch 33. More specifically, in this embodiment, the number of the first sub-branch 310 is ten, the number of the second sub-branch 321 is four, and the number of the third sub-branch 331 is four. Of course, the number of the first sub-branch 310, the number of the second sub-branch 321, and the number of the third sub-branch 331 are not limited thereto, and can be set to other numbers as desired.

The number of the first sub-branch 310 of the first branch 31 relatively closer to the main inlet 10a is larger, and the number of the second sub-branch 321 and the third sub-branch331 relatively farther away from the main inlet 10a is smaller, which can reduce the flow resistance of the cooling liquid when entering the second branch 32, and the third branch 33.

The widths, i.e., the cross-sectional areas, of the sub-branches in all the branches are the same, i.e., the cross-sectional areas of the multiple first sub-branches 310, the multiple second sub-branches 321, and the multiple third sub-branches 331 are the same, which can make the flow resistance of the cooling liquid within the various sub-branches be the same, and at the same time, the volumes of the cooling liquid within the multiple sub-branches are the same, which ensures the uniformity of heat dissipation at various positions of the battery cold plate. Combined with the foregoing description of the quantitative relationship, it can be seen that in the first direction X, the size of the first branch 31 is larger than the size of the second branch 32 and the size of the third branch 33.

Multiple second flow guide strips 21b are arranged within the outlet convergence pipeline 20b, and the multiple second flow guide strips 21b extend along the first direction X and are arranged at intervals. The multiple second flow guide strips 21b extend along the first direction X. With the second flow guide strips 21b, the cooling liquid entering the inlet convergence pipeline 20a can flow along the second flow guide strips 21b, i.e., flow along the first direction X, thereby reducing the flow resistance of the cooling liquid in the inlet convergence pipeline 20a. The multiple second flow guide strips 21b are arranged at intervals along the first direction X. Part of the cooling liquid may flow to the outlet convergence pipeline 20b in gaps between the multiple flow guide strips.

The main outlet 10b is provided with an outlet cavity 11b, and the main outlet 10b is in communication with the outlet convergence pipeline 20b via the outlet cavity 11b. The outlet cavity 11b is square, multiple outlet projections 12b are arranged within the outlet cavity 11b, the multiple outlet projections 12b are arranged in an array, and the multiple outlet projections 12b can also be used for diverting the cooling liquid flowing out of the outlet cavity 11b to avoid the case that cooling liquid is too centralized at the position, increasing the flow resistance.

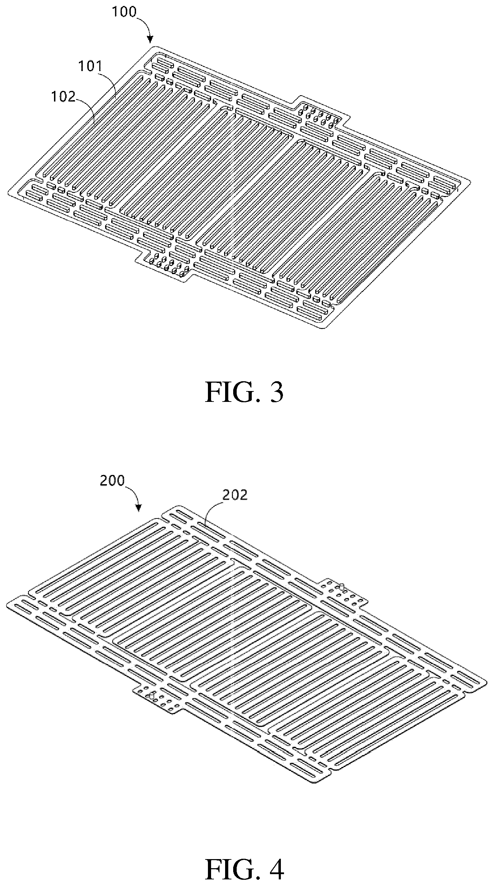

In this embodiment, as shown in FIG. 3 and FIG. 4, the battery cold plate includes a first plate body 100 and a second plate body 200 arranged in parallel, and the first plate body 100 and the second plate body 200 are both made of heat-conducting plates to facilitate heat transfer. The first plate body 100 is stamped to form a cavity 101 and multiple convex ribs 102 on the surface of the plate body, the multiple convex ribs 102 are arranged in the cavity 101, and the convex ribs 102 separate the cavity 101 to form multiple pipelines for the cooling liquid to pass through, i.e., the cavity 101 can be separated into the two convergence pipelines 20a/20b, the multiple branches 31/32/33, and the multiple sub-branches located within the branch. The second plate body 200 is provided with multiple butt joint holes 202, the multiple butt joint holes 202 are provided in correspondence with the multiple convex ribs 102, and the multiple convex ribs 102 are connected in the multiple butt joint holes 202 in an abutting-against mode so as to realize positioning connection between the first plate body 100 and the second plate body 200. The convex ribs 102 and the butt joint holes 202 may be in interference fit so as to make the convex rib 102 tightly connected to the butt-joint position, ensure that the multiple branches 31/32/33 are isolated from each other, and avoid the flow of the cooling liquid among the branches. A heat-conducting sealant may be provided between the butt joint hole 202 and the convex rib 102 to further ensure that the connected position between the butt joint hole and the convex rib is sealed.

In this implementation, the butt joint hole 202 is a through hole so as to facilitate machining and molding by stamping, the convex rib 102 is connected in the butt joint hole 202, and the butt joint hole 202 is filled with the heat-conducting sealant so as to make the butt joint hole 202 be flush at the outer surface of the second plate body 200, facilitating attachment to the battery. Of course, in other implementations, the butt joint hole 202 may also be a blind hole. As an alternative implementation, the second plate body 200 may be not provided with the butt joint hole 202.

In addition, an embodiment of the present invention further provides a battery system which includes batteries and the foregoing battery cold plate. The battery cold plate is attached to the battery, and the battery cold plate is capable of performing heat dissipation on the battery in a liquid cooling method.

According to the battery cold plate and the battery system provided in the present invention, the main inlet and the main outlet of the battery cold plate are placed in the middle position of the cold plate, and the cooling liquid enters the cold plate from the main inlet in the middle position, and then needs to flow to both sides, and then flows out of the cold plate, after flowing through multiple branches, from the main outlet in the middle position, so that a flow pipeline of the cooling liquid in the battery cold plate is roughly in the form of a U-shaped structure. Multiple convergence pipelines are connected in parallel as much as possible according to the arrangement of the battery, i.e., multiple rows of flow guide strips are arranged, in order to reduce the along-the-way resistance of the convergence pipeline. The number of branches is determined by matching according to the convergence length and the branch length. To ensure the homogeneity of flow distribution in a single diversion branch, throttling ports are designed in each branch based on the distance from the throttling port to the main inlet and the distance from the throttling port to the main outlet. The flow channel structure arrangement of the battery cold plate of the present invention minimizes the flow resistance under the same flow and within the same area of the battery cold plate, thereby facilitating lowering the power demand of the system for a circulation pump, which then reduces the cost of the system; and at the same time, the low-flow-resistance cold plate structure can maximize the flow of the battery cold plate under a set power of the circulation pump, thereby reducing the temperature difference between inlets and outlets.

According to the battery cold plate and the battery system provided by the present invention, the external interface of the battery cold plate uses a one-in-one-out structure, and the along-the-way length of the convergence pipeline is halved by the middle-in-middle-out mode of the inlet and the outlet, and the branch for diversion uses the principle for maximizing the number of the branch, and the more branches are connected in parallel, the lower the flow resistance of the total pipelines connected in parallel is, and then the flow resistance of the entire cold plate is designed to be minimum. By using the battery cold plate structure of the present invention, the flow resistance of the large cold plate under a high flow can be minimized, and by optimizing the aperture, i.e., the cross-sectional area, of the throttling port, the flow of the various branches can be evenly allocated, thereby enhancing the heat exchange performance of the entire cold plate. While reducing the flow resistance, the battery cold plate is made suitable for a large-size battery cold plate structure, and the power of the circulation pump can be reduced, thereby reducing the cost of the entire vehicle system.

In the description of the foregoing embodiment, it can be understood that the first flow guide strip 21a and the second flow guide strip 21b are named when they are arranged in different convergence pipelines, i.e., multiple flow guide strips can be arranged in the convergence pipeline, and the multiple flow guide strips extend along the first direction X and are arranged at intervals. By using the flow guide strip, the cooling liquid entering the convergence pipeline can flow along the flow guide strip, i.e., flow along the first direction X, thus lowering the flow resistance of the cooling liquid in the convergence pipeline. The multiple flow guide strips may be arranged in one row, or two or more rows.

In the description of the foregoing embodiment, it can be understood that the first branch 31, the second branch 32, and the third branch 33 are named among the multiple branches according to different positions, which can be understood as different specific realizations of the branch. The same applies to the first sub-branch, the second sub-branch, and the third sub-branch.

In the description of the foregoing embodiment, it can be understood that the first inflow throttling port 31a, the second inflow throttling port 32a, and the third inflow throttling port 33a are named according to the inflow throttling ports on different branches, and are different realizations of the inflow throttling port, and accordingly, the first outflow throttling port 31b, the second outflow throttling port 32b, and the third outflow throttling port 33b are named according to the outflow throttling ports on different branches, and are different realizations of the outflow throttling port. The number of the inflow throttling port and the number of the outflow throttling port in a certain branch, especially in the branch close to the external interface, may both be one. In this case, the distance between the inflow throttling port and the main inlet 10a can be set to be smaller than the distance between the outflow throttling port and the main outlet 10b, so that the cooling liquid entering the inlet convergence pipeline 20a can flow at a shorter distance to enter the branch, and so that it is easy for the cooling liquid to enter the branch, and at the same time, the inflow throttling port and the outflow throttling port are respectively provided close to both opposite sides of the branch, which can make the cooling liquid entering the branch be able to flow through all the sub-branches. The number of the inflow throttling port and the number of the outflow throttling port in the same branch may be the same, and the cross-sectional area of the outflow throttling port may be set to be greater than the cross-sectional area of the inflow throttling port to reduce the flow resistance between the branch and the outlet convergence pipeline, or the cross-sectional area of the outflow throttling port and the cross-sectional area of the inflow throttling port may be equal.

At the same time, the inflow throttling port and the outflow throttling port are different realizations of the throttling port. The number and cross-sectional area of the inflow throttling port and the outflow throttling port are designed to control the flow and flow rate of the cooling liquid entering the branch. The number of throttling ports in the branch close to the external interface is smaller than the number of throttling ports in the branch away from the external interface, so that the cooling liquid can easily enter the branch away from the external interface. The cross-sectional areas of the various throttling ports may be the same to facilitate machining and molding, or the cross-sectional area of the throttling ports in the branch close to the external interface is smaller than the cross-sectional area of the throttling ports in the branch away from the external interface, also allowing the cooling liquid to easily enter the branch away from the external interface.

In the description of the foregoing embodiment, it can be understood that the inflow convergence cavity 30a and the outflow convergence cavity 30b are named according to the different positions where the convergence cavities are located, and are different realizations of the inflow convergence cavity 30a and the outflow convergence cavity 30a. The shapes of the convergence cavities can be used for both the first branch 31 and other branches; and the shapes of the convergence cavities are particularly suitable for the case that the number of the inflow throttling port and the number of the outflow throttling port in the branch are both one. In the branch, the convergence cavity may be formed between the end portions of the multiple sub-branches and the throttling port, and in the first direction X, the size of the convergence cavity in the second direction Y gradually decreases from a position close to the throttling port to a position away from the throttling port, so as to make it easy for the cooling liquid to flow into or out of the branch, reducing the flow resistance of the cooling liquid to flow into or out of the branch.

In the description of the foregoing embodiment, it can be understood that the inlet cavity 11a and the outlet cavity are different realizations of an interface cavity, the interface cavity can be arranged at the external interface, and the external interface is in communication with the convergence pipeline via the interface cavity. The interface cavity is square, multiple projections are arranged within the inlet cavity 11a, the multiple projections are arranged in an array, and the multiple projections can also be used for diverting the cooling liquid flowing into or out of the interface cavity to avoid the case that cooling liquid is too centralized at the position, increasing the flow resistance.

In the foregoing embodiment, the numbers of sub-branches within the two branches located at both ends in the first direction X are slightly different, and herein, in order to ensure the balance of the flow resistance at both ends, the numbers of the sub-branches within the two branches located at both ends in the first direction X can be set to be the same. Furthermore, with the connection line between the positions where the centers of the two external interfaces are located as a central axis, the structure of the battery cold plate on both sides of the central axis can be set to be a completely symmetrical structure, in order to ensure a consistent flow resistance on both sides.

In the foregoing embodiment, the number of the branch is 6, 3 branches are on each side of the middle position, and the cooling liquid can enter from the main inlet in the middle position, and flow along the inlet convergence pipeline toward both ends, and after passing through the branch, the cooling liquid flows back to the main outlet from both sides via the outlet convergence pipeline. It is to be noted that: the number of the branch is not limited thereto, under the condition that the space position is sufficient, branches are arranged as many as possible for diversion and the number of the branch can be designed according to the arrangement of battery cells or the heat dissipation demand, and from the perspective of designing to reduce the flow resistance, when the number of the branch is determined: if the size of the battery cold plate in the first direction is 2 times greater than the size of the battery cold plate in the second direction, the number of the branch is designed according to the demand of the heat dissipation surface of the battery cell, and the design of multiple branches connected in parallel is used, for example on the basis of the above embodiment, fourth and fifth branches are increased, namely, the number of the branch is increased; and if the size of the battery cold plate in the first direction is 2 times smaller than the size of the battery cold plate in the second direction, the branch can be designed with reference to the size of half the length of the battery cold plate in combination with the width of the sub-branch, for example, in this embodiment, the number of the branch is 6. Herein, the battery cold plate is square, and the size thereof in the first direction is relatively larger than the size thereof in the second direction, so the size in the first direction is the length of the battery cold plate, and the size in the second direction is the width of the battery cold plate, so half the length of the battery cold plate is half the size of the battery cold plate in the first direction. Since the sub-branch is arranged along the second direction in the form of an elongated strip, it can be understood that the length of the sub-branch is the size thereof in the second direction, and the width of the sub-branch is the size thereof in the first direction, so as to further equalize the flow resistance of the flow channel of the entire cold plate, improving the cooling and heat dissipation capacity.

## Claims

1. A battery cold plate, comprising two external interfaces, two convergence pipelines (20a, 20b), and a plurality of branches,
each of the convergence pipelines (20a, 20b) being arranged extending along a first direction,
the plurality of branches being arranged side by side along the first direction, and arranged between the two convergence pipelines (20a, 20b) in a second direction; both ends of each of the branches in the second direction being respectively in communication with the two convergence pipelines (20a, 20b) through at least one throttling port; the first direction and the second direction being two directions perpendicular to each other; the total cross-sectional area of the throttling port in a branch close to the external interface being smaller than the total cross-sectional area of the throttling port in a branch away from the external interface; and
a plurality of sub-branches (310, 321, 331) being arranged in the branch along the first direction, each of the sub-branches (310, 321, 331) being arranged extending along the second direction, the end portions of the plurality of sub-branches (310, 321, 331) in the same branch being communicated, and the cross-sectional areas of all the sub-branches being the same, **characterized in that** the two external interfaces are respectively in communication with the middle positions of the two convergence pipelines (20a, 20b) in the first direction.

2. The battery cold plate according to claim 1, wherein the number of the throttling port in the branch close to the external interface is less than the number of the throttling port in the branch away from the external interface.

3. The battery cold plate according to claim 1, wherein the number of the throttling port in the branch close to the external interface is equal to the number of the throttling port in the branch away from the external interface.

4. The battery cold plate according to claim 2, wherein the cross-sectional areas of the various throttling ports are the same.

5. The battery cold plate according to any one of claims 1 to 3, wherein the cross-sectional area of the throttling port in the branch close to the external interface is less than the cross-sectional area of the throttling port in the branch away from the external interface.

6. The battery cold plate according to any one of claims 1 to 5, wherein the number of the sub-branch within the branch close to the external interface is greater than the number of the sub-branch within the branch away from the external interface.

7. The battery cold plate according to any one of claims 1 to 6, wherein all the sub-branches (310, 321, 331) in all the branches have the same cross-sectional area.

8. The battery cold plate according to any one of claims 1 to 7, wherein the two external interfaces are respectively a main inlet (10a) and a main outlet (10b); the two convergence pipelines are respectively an inlet convergence pipeline (20a) and an outlet convergence pipeline (20b); the main inlet (10a), the inlet convergence pipeline (20a), the plurality of branches, the outlet convergence pipeline (20b), and the main outlet (10b) are sequentially communicated; a throttling port between the branch and the inlet convergence pipeline (20a) is an inflow throttling port (31a, 32a, 33a); and a throttling port between the branch and the outlet convergence pipeline (20b) is an outflow throttling port (31b, 32b, 33b), wherein preferably the number of the inflow throttling port (31a, 32a, 33a) and the number of the outflow throttling port (31b, 32b, 33b) in the same branch are the same, and the cross-sectional area of the outflow throttling port (31b, 32b, 33b) is equal to or greater than the cross-sectional area of the inflow throttling port (31a, 32a, 33a).

9. The battery cold plate according to claim 8, wherein a branch close to the main inlet (10a) comprises a first inflow throttling port (31a) and a first outflow throttling port (31b), and the distance between the first inflow throttling port (31a) and the main inlet (10a) is less than the distance between the first outflow throttling port (31b) and the main outlet (10a).

10. The battery cold plate according to claim 8 or 9, wherein in one of the branches, the branch has a first side (311) and a second side (312) opposite to each other and in the first direction, an inflow convergence cavity (30a) is formed between the end portions of a plurality of the sub-branches (310) and the inflow throttling port (31a), and an outflow convergence cavity (30b) is formed between the end portions of a plurality of the sub-branches (310) and the outflow throttling port (31b);
Along a direction from the first side (311) to the second side (312), the size of the inflow convergence cavity (30a) in the second direction gradually decreases, and the size of the outflow convergence cavity (30b) in the second direction gradually increases;
the inflow throttling port (31a) is arranged at a position where the size of the inflow convergence cavity (30a) in the second direction is larger; and
the outflow throttling port (31b) is arranged at a position where the size of the outflow convergence cavity (30b) in the second direction is larger.

11. The battery cold plate according to any one of claims 8 to 10, wherein an inlet cavity (11a) is provided at the main inlet (10a), the main inlet (10a) is in communication with the inlet convergence pipeline (20a) via the inlet cavity (11a) , a plurality of inlet projections (12a) are arranged in the inlet cavity (11a), and the plurality of inlet projections (12a) are arranged in an array; and/or
wherein an outlet cavity (11b) is provided at the main outlet (10b), the main outlet (10b) is in communication with the outlet convergence pipeline (20b) via the outlet cavity (11b), a plurality of outlet projections (12b) are arranged in the outlet cavity (11b), and the plurality of outlet projections (12b) are arranged in an array.

12. The battery cold plate according to any one of claims 8 to 11, wherein a plurality of first flow guide strips (21a) are arranged within the inlet convergence pipeline (20a), and the plurality of first flow guide strips (21a) extend along the first direction and are arranged at intervals, wherein preferably the plurality of first flow guide strips (21a) are arranged in one or more rows along the second direction.

13. The battery cold plate according to any one of claims 1 to 12, wherein with the connection line of the positions where the centers of the two external interfaces are located as a central axis, the structure of the battery cold plate is symmetrical on both sides of the central axis.

14. The battery cold plate according to any one of claims 1 to 13, wherein the battery cold plate comprises a first plate body (100) and a second plate body (200) opposite to the first plate body (100); the first plate body (100) forms a cavity (101) and a plurality of convex ribs (102) on the surface; the plurality of convex ribs (102) are located in the cavity (101); the convex ribs (102) separate the cavity (101) to form the two convergence pipelines (20a, 20b), the plurality of branches (31, 32, 33), and the plurality of sub-branches; the second plate body (200) is provided with a plurality of butt joint holes (202); the plurality of butt joint holes (202) are provided in correspondence with the plurality of convex ribs (102); and the plurality of convex ribs (102) are connected in the plurality of butt joint holes (202) in an abutting-against mode to realize positioning connection between the first plate body (100) and the second plate body (200), wherein preferably the plurality of convex ribs (102) and the plurality of butt joint holes (202) are in interference fit; and/or wherein preferably the butt joint hole (202) is a through hole.

15. A battery system, comprising batteries and a battery cold plate according to any one of claims 1-14, the battery cold plate being attached to the battery.

## Patentansprüche

1. Batteriekühlplatte, umfassend zwei externe Schnittstellen, zwei Konvergenzleitungen (20a, 20b) und eine Vielzahl von Zweigen,
wobei jede der Konvergenzleitungen (20a, 20b) angeordnet ist, um sich entlang einer ersten Richtung zu erstrecken,
die Vielzahl von Zweigen nebeneinander entlang der ersten Richtung angeordnet und zwischen den zwei Konvergenzleitungen (20a, 20b) in einer zweiten Richtung angeordnet ist; beide Enden jedes der Zweige in der zweiten Richtung jeweils mit den zwei Konvergenzleitungen (20a, 20b) durch mindestens einen Drosselanschluss in Kommunikation stehen; die erste Richtung und die zweite Richtung zwei zueinander senkrechte Richtungen sind; die Gesamtquerschnittsfläche des Drosselanschlusses in einem Zweig nahe der externen Schnittstelle kleiner als die Gesamtquerschnittsfläche des Drosselanschlusses in einem Zweig entfernt von der externen Schnittstelle ist; und
eine Vielzahl von Unterzweigen (310, 321, 331), die in dem Zweig entlang der ersten Richtung angeordnet ist, wobei jeder der Unterzweige (310, 321, 331) sich entlang der zweiten Richtung erstreckend angeordnet ist, die Endabschnitte der Vielzahl von Unterzweigen (310, 321, 331) in demselben Zweig in Kommunikation stehen und die Querschnittsflächen aller Unterzweige gleich sind, **dadurch gekennzeichnet, dass** die zwei externen Schnittstellen jeweils mit den mittleren Positionen der zwei Konvergenzleitungen (20a, 20b) in der ersten Richtung in Kommunikation stehen.

2. Batteriekühlplatte nach Anspruch 1, wobei die Anzahl des Drosselanschlusses in dem Zweig nahe der externen Schnittstelle geringer als die Anzahl des Drosselanschlusses in dem Zweig entfernt von der externen Schnittstelle ist.

3. Batteriekühlplatte nach Anspruch 1, wobei die Anzahl des Drosselanschlusses in dem Zweig nahe der externen Schnittstelle gleich der Anzahl des Drosselanschlusses in dem Zweig entfernt von der externen Schnittstelle ist.

4. Batteriekühlplatte nach Anspruch 2, wobei die Querschnittsflächen der verschiedenen Drosselanschlüsse gleich sind.

5. Batteriekühlplatte nach einem der Ansprüche 1 bis 3, wobei die Querschnittsfläche des Drosselanschlusses in dem Zweig nahe der externen Schnittstelle kleiner als die Querschnittsfläche des Drosselanschlusses in dem Zweig entfernt von der externen Schnittstelle ist.

6. Batteriekühlplatte nach einem der Ansprüche 1 bis 5, wobei die Anzahl der Unterzweige innerhalb des Zweigs nahe der externen Schnittstelle größer als die Anzahl der Unterzweige innerhalb des Zweigs entfernt von der externen Schnittstelle ist.

7. Batteriekühlplatte nach einem der Ansprüche 1 bis 6, wobei alle Unterzweige (310, 321, 331) in allen Zweigen dieselbe Querschnittsfläche aufweisen.

8. Batteriekühlplatte nach einem der Ansprüche 1 bis 7, wobei die zwei externen Schnittstellen jeweils ein Haupteinlass (10a) und ein Hauptauslass (10b) sind; die zwei Konvergenzleitungen jeweils eine Einlasskonvergenzleitung (20a) und eine Auslasskonvergenzleitung (20b) sind; der Haupteinlass (10a), die Einlasskonvergenzleitung (20a), die Vielzahl von Zweigen, die Auslasskonvergenzleitung (20b) und der Hauptauslass (10b) sequenziell miteinander in Kommunikation stehen; ein Drosselanschluss zwischen dem Zweig und der Einlasskonvergenzleitung (20a) ein Zuflussdrosselanschluss (31a, 32a, 33a) ist; und ein Drosselanschluss zwischen dem Zweig und der Auslasskonvergenzleitung (20b) ein Abflussdrosselanschluss (31b, 32b, 33b) ist, wobei vorzugsweise die Anzahl des Zuflussdrosselanschlusses (31a, 32a, 33a) und die Anzahl des Abflussdrosselanschlusses (31b, 32b, 33b) in demselben Zweig gleich sind, und die Querschnittsfläche des Abflussdrosselanschlusses (31b, 32b, 33b) gleich oder größer als die Querschnittsfläche des Zuflussdrosselanschlusses (31a, 32a, 33a) ist.

9. Batteriekühlplatte nach Anspruch 8, wobei ein Zweig nahe dem Haupteinlass (10a) einen ersten Zuflussdrosselanschluss (31a) und einen ersten Abflussdrosselanschluss (31b) umfasst, und der Abstand zwischen dem ersten Zuflussdrosselanschluss (31a) und dem Haupteinlass (10a) geringer als der Abstand zwischen dem ersten Abflussdrosselanschluss (31b) und dem Hauptauslass (10a) ist.

10. Batteriekühlplatte nach Anspruch 8 oder 9, wobei in einem der Zweige der Zweig eine erste Seite (311) und eine zweite Seite (312) aufweist, die einander gegenüberliegen und in der ersten Richtung, ein Zuflusskonvergenzhohlraum (30a) zwischen den Endabschnitten einer Vielzahl von Unterzweigen (310) und dem Zuflussdrosselanschluss (31a) gebildet ist, und ein Abflusskonvergenzhohlraum (30b) zwischen den Endabschnitten einer Vielzahl von Unterzweigen (310) und dem Abflussdrosselanschluss (31b) gebildet ist;
entlang einer Richtung von der ersten Seite (311) zu der zweiten Seite (312) die Größe des Zuflusskonvergenzhohlraums (30a) in der zweiten Richtung allmählich abnimmt, und die Größe des Abflusskonvergenzhohlraums (30b) in der zweiten Richtung allmählich zunimmt;
der Zuflussdrosselanschluss (31a) an einer Position angeordnet ist, an der die Größe des Zuflusskonvergenzhohlraums (30a) in der zweiten Richtung größer ist; und
der Abflussdrosselanschluss (31b) an einer Position angeordnet ist, an der die Größe des Abflusskonvergenzhohlraums (30b) in der zweiten Richtung größer ist.

11. Batteriekühlplatte nach einem der Ansprüche 8 bis 10, wobei ein Einlasshohlraum (11a) an dem Haupteinlass (10a) bereitgestellt ist, der Haupteinlass (10a) über den Einlasshohlraum (11a) mit der Einlasskonvergenzleitung (20a) in Kommunikation steht, eine Vielzahl von Einlassvorsprüngen (12a) in dem Einlasshohlraum (11a) angeordnet ist, und die Vielzahl von Einlassvorsprüngen (12a) in einem Array angeordnet ist; und/oder
wobei ein Auslasshohlraum (11b) an dem Hauptauslass (10b) bereitgestellt ist, der Hauptauslass (10b) über den Auslasshohlraum (11b) mit der Auslasskonvergenzleitung (20b) in Kommunikation steht, eine Vielzahl von Auslassvorsprüngen (12b) in dem Auslasshohlraum (11b) angeordnet ist, und die Vielzahl von Auslassvorsprüngen (12b) in einem Array angeordnet ist.

12. Batteriekühlplatte nach einem der Ansprüche 8 bis 11, wobei eine Vielzahl von ersten Strömungsführungsleisten (21a) innerhalb der Einlasskonvergenzleitung (20a) angeordnet ist, und sich die Vielzahl von ersten Strömungsführungsleisten (21a) entlang der ersten Richtung erstreckt und in Intervallen angeordnet ist, wobei vorzugsweise die Vielzahl von ersten Strömungsführungsleisten (21a) in einer oder mehreren Reihen entlang der zweiten Richtung angeordnet ist.

13. Batteriekühlplatte nach einem der Ansprüche 1 bis 12, wobei mit der Verbindungslinie der Positionen, an denen die Zentren der zwei externen Schnittstellen als eine Mittelachse angeordnet sind, die Struktur der Batteriekühlplatte auf beiden Seiten der Mittelachse symmetrisch ist.

14. Batteriekühlplatte nach einem der Ansprüche 1 bis 13, wobei die Batteriekühlplatte einen ersten Plattenkörper (100) und einen zweiten Plattenkörper (200) gegenüber dem ersten Plattenkörper (100) umfasst; der erste Plattenkörper (100) einen Hohlraum (101) und eine Vielzahl von konvexen Rippen (102) auf der Oberfläche bildet; die Vielzahl von konvexen Rippen (102) in dem Hohlraum (101) angeordnet ist; die konvexen Rippen (102) den Hohlraum (101) trennen, um die zwei Konvergenzleitungen (20a, 20b), die Vielzahl von Zweigen (31, 32, 33) und die Vielzahl von Unterzweigen zu bilden; der zweite Plattenkörper (200) mit einer Vielzahl von Stoßverbindungslöchern (202) bereitgestellt ist; die Vielzahl von Stoßverbindungslöchern (202) in Entsprechung zu der Vielzahl von konvexen Rippen (102) bereitgestellt ist; und die Vielzahl von konvexen Rippen (102) in der Vielzahl von Stoßverbindungslöchern (202) in einem Anschlagmodus verbunden ist, um eine Positionierungsverbindung zwischen dem ersten Plattenkörper (100) und dem zweiten Plattenkörper (200) zu realisieren, wobei vorzugsweise die Vielzahl von konvexen Rippen (102) und die Vielzahl von Stoßverbindungslöchern (202) in Presspassung sind; und/oder wobei vorzugsweise das Stoßverbindungsloch (202) ein Durchgangsloch ist.

15. Batteriesystem, umfassend Batterien und eine Batteriekühlplatte nach einem der Ansprüche 1 bis 14, wobei die Batteriekühlplatte an der Batterie befestigt ist.

## Revendications

1. Plaque froide de batterie, comprenant deux interfaces externes, deux conduites de convergence (20a, 20b), et une pluralité de branches,
chacune des conduites de convergence (20a, 20b) étant agencée pour s'étendre le long d'une première direction,
la pluralité de branches étant agencée côte à côte le long de la première direction, et agencée entre les deux conduites de convergence (20a, 20b) dans une seconde direction ; les deux extrémités de chacune des branches dans la seconde direction étant respectivement en communication avec les deux conduites de convergence (20a, 20b) par l'intermédiaire d'au moins un orifice d'étranglement ; la première direction et la seconde direction étant deux directions perpendiculaires l'une à l'autre ; la surface de section transversale totale de l'orifice d'étranglement dans une branche proche de l'interface externe étant inférieure à la surface de section transversale totale de l'orifice d'étranglement dans une branche éloignée de l'interface externe ; et
une pluralité de sous-branches (310, 321, 331) étant agencée dans la branche le long de la première direction, chacune des sous-branches (310, 321, 331) étant agencée pour s'étendre le long de la seconde direction, les parties d'extrémité de la pluralité de sous-branches (310, 321, 331) dans la même branche étant en communication, et les surfaces de section transversale de toutes les sous-branches étant identiques, **caractérisée en ce que** les deux interfaces externes sont respectivement en communication avec les positions médianes des deux conduites de convergence (20a, 20b) dans la première direction.

2. Plaque froide de batterie selon la revendication 1, dans laquelle le nombre de l'orifice d'étranglement dans la branche proche de l'interface externe est inférieur au nombre de l'orifice d'étranglement dans la branche éloignée de l'interface externe.

3. Plaque froide de batterie selon la revendication 1, dans laquelle le nombre de l'orifice d'étranglement dans la branche proche de l'interface externe est égal au nombre de l'orifice d'étranglement dans la branche éloignée de l'interface externe.

4. Plaque froide de batterie selon la revendication 2, dans laquelle les surfaces de section transversale des différents orifices d'étranglement sont identiques.

5. Plaque froide de batterie selon l'une quelconque des revendications 1 à 3, dans laquelle la surface de section transversale de l'orifice d'étranglement dans la branche proche de l'interface externe est inférieure à la surface de section transversale de l'orifice d'étranglement dans la branche éloignée de l'interface externe.

6. Plaque froide de batterie selon l'une quelconque des revendications 1 à 5, dans laquelle le nombre de la sous-branche dans la branche proche de l'interface externe est supérieur au nombre de la sous-branche dans la branche éloignée de l'interface externe.

7. Plaque froide de batterie selon l'une quelconque des revendications 1 à 6, dans laquelle toutes les sous-branches (310, 321, 331) dans toutes les branches ont la même surface de section transversale.

8. Plaque froide de batterie selon l'une quelconque des revendications 1 à 7, dans laquelle les deux interfaces externes sont respectivement une entrée principale (10a) et une sortie principale (10b) ; les deux conduites de convergence sont respectivement une conduite de convergence d'entrée (20a) et une conduite de convergence de sortie (20b) ; l'entrée principale (10a), la conduite de convergence d'entrée (20a), la pluralité de branches, la conduite de convergence de sortie (20b), et la sortie principale (10b) sont en communication de manière séquentielle ; un orifice d'étranglement entre la branche et la conduite de convergence d'entrée (20a) est un orifice d'étranglement d'entrée (31a, 32a, 33a) ; et un orifice d'étranglement entre la branche et la conduite de convergence de sortie (20b) est un orifice d'étranglement de sortie (31b, 32b, 33b), dans laquelle, de préférence, le nombre de l'orifice d'étranglement d'entrée (31a, 32a, 33a) et le nombre de l'orifice d'étranglement de sortie (31b, 32b, 33b) dans la même branche sont identiques, et la surface de section transversale de l'orifice d'étranglement de sortie (31b, 32b, 33b) est égale ou supérieure à la surface de section transversale de l'orifice d'étranglement d'entrée (31a, 32a, 33a).

9. Plaque froide de batterie selon la revendication 8, dans laquelle une branche proche de l'entrée principale (10a) comprend un premier orifice d'étranglement d'entrée (31a) et un premier orifice d'étranglement de sortie (31b), et la distance entre le premier orifice d'étranglement d'entrée (31a) et l'entrée principale (10a) est inférieure à la distance entre le premier orifice d'étranglement de sortie (31b) et la sortie principale (10a).

10. Plaque froide de batterie selon la revendication 8 ou 9, dans laquelle dans l'une des branches, la branche a un premier côté (311) et un second côté (312) opposés l'un à l'autre et dans la première direction, une cavité de convergence d'entrée (30a) est formée entre les parties d'extrémité d'une pluralité des sous-branches (310) et l'orifice d'étranglement d'entrée (31a), et une cavité de convergence de sortie (30b) est formée entre les parties d'extrémité d'une pluralité des sous-branches (310) et l'orifice d'étranglement de sortie (31b) ;
le long d'une direction allant du premier côté (311) au second côté (312), la taille de la cavité de convergence d'entrée (30a) dans la seconde direction diminue progressivement, et la taille de la cavité de convergence de sortie (30b) dans la seconde direction augmente progressivement ;
l'orifice d'étranglement d'entrée (31a) est disposé au niveau d'une position où la taille de la cavité de convergence d'entrée (30a) dans la seconde direction est plus grande ; et
l'orifice d'étranglement de sortie (31b) est disposé au niveau d'une position où la taille de la cavité de convergence de sortie (30b) dans la seconde direction est plus grande.

11. Plaque froide de batterie selon l'une quelconque des revendications 8 à 10, dans laquelle une cavité d'entrée (11a) est fournie au niveau de l'entrée principale (10a), l'entrée principale (10a) est en communication avec la conduite de convergence d'entrée (20a) par l'intermédiaire de la cavité d'entrée (11a), une pluralité de protubérances d'entrée (12a) est agencée dans la cavité d'entrée (11a), et la pluralité de protubérances d'entrée (12a) est agencée en un réseau ; et/ou
dans laquelle une cavité de sortie (11b) est fournie au niveau de la sortie principale (10b), la sortie principale (10b) est en communication avec la conduite de convergence de sortie (20b) par l'intermédiaire de la cavité de sortie (11b), une pluralité de protubérances de sortie (12b) est agencée dans la cavité de sortie (11b), et la pluralité de protubérances de sortie (12b) est agencée en un réseau.

12. Plaque froide de batterie selon l'une quelconque des revendications 8 à 11, dans laquelle une pluralité de premières bandes de guidage d'écoulement (21a) est agencée à l'intérieur de la conduite de convergence d'entrée (20a), et la pluralité de premières bandes de guidage d'écoulement (21a) s'étend le long de la première direction et est agencée à des intervalles, dans laquelle, de préférence, la pluralité de premières bandes de guidage d'écoulement (21a) est agencée en une ou plusieurs rangées le long de la seconde direction.

13. Plaque froide de batterie selon l'une quelconque des revendications 1 à 12, dans laquelle, avec la ligne de liaison des positions où les centres des deux interfaces externes sont situés en guise d'axe central, la structure de la plaque froide de batterie est symétrique de part et d'autre de l'axe central.

14. Plaque froide de batterie selon l'une quelconque des revendications 1 à 13, dans laquelle la plaque froide de batterie comprend un premier corps de plaque (100) et un second corps de plaque (200) opposé au premier corps de plaque (100) ; le premier corps de plaque (100) forme une cavité (101) et une pluralité de nervures convexes (102) sur la surface ; la pluralité de nervures convexes (102) est située dans la cavité (101) ; les nervures convexes (102) séparent la cavité (101) pour former les deux conduites de convergence (20a, 20b), la pluralité de branches (31, 32, 33), et la pluralité de sous-branches ; le second corps de plaque (200) est pourvu d'une pluralité de trous d'aboutage (202) ; la pluralité de trous d'aboutage (202) est fournie en correspondance avec la pluralité de nervures convexes (102) ; et la pluralité de nervures convexes (102) est reliée dans la pluralité de trous d'aboutage (202) dans un mode bout à bout pour réaliser une liaison de positionnement entre le premier corps de plaque (100) et le second corps de plaque (200), dans laquelle de préférence la pluralité de nervures convexes (102) et la pluralité de trous d'aboutage (202) sont en ajustement serré ; et/ou dans laquelle, de préférence, le trou d'aboutage (202) est un trou traversant.

15. Système de batterie, comprenant des batteries et une plaque froide de batterie selon l'une quelconque des revendications 1 à 14, la plaque froide de batterie étant fixée à la batterie.
